# EUROPÄISCHE PATENTSCHRIFT

(11) **EP 2 103 840 B1**
(45) Veröffentlichungstag und Bekanntmachung des Hinweises auf die Patenterteilung: **19.10.2011**
(21) Anmeldenummer: 09006504.6
(22) Anmeldetag: 25.11.2006
(51) Int. Cl.: F16F 15/137, F16F 15/123, F16H 45/02, F16H 41/24

(54) **Torsionsschwingungsdämpfer**
Torsion vibration damper
Amortisseur de vibrations de torsion

(30) Priorität: 09.12.2005 DE 102005058783
(43) Veröffentlichungstag der Anmeldung: 23.09.2009
(62) Teilanmeldung aus: 06024488.6
(73) Patentinhaber: ZF Friedrichshafen AG, 88038 Friedrichshafen (DE)
(72) Erfinder: Wack, Erwin, 97464 Niederwerrn (DE); Sasse, Christoph, Dr., 97422 Schweinfurt (DE); Sudau, Jörg, 97464 Niederwerrn (DE)

(56) Entgegenhaltungen:
- EP-A- 0 744 563
- DE-A1- 10 358 901

## Beschreibung

Die Erfindung bezieht sich auf Torsionsschwingungsdämpfer an einer Überbrückungskupplung einer hydrodynamischen Kupplungsanordnung entsprechend dem Oberbegriff des Anspruches 1 oder 2.

Solche Torsionsschwingungsdämpfer sind aus dem Stand der Technik bekannt. So zeigt die gattungsbildende DE 103 58 901 A1 eine hydrodynamische Kopplungsanordnung, die, als Drehmomentwandler realisiert, mit einer Überbrückungskupplung ausgebildet ist, deren Kolben an seiner dem Kupplungsgehäuse zugewandten Seite mit einer Reibfläche versehen ist, über welche er mittels einer Zwischenlamelle mit einer am Kupplungsgehäuse vorgesehenen Gegenreibfläche in Reibverbindung bringbar ist. Die Überbrückungskupplung stellt eine Wirkverbindung zwischen dem mit einem Antrieb, wie der Kurbelwelle einer Brennkraftmaschine, drehfesten Kupplungsgehäuse und dem Torsionsschwingungsdämpfer her, indem ein antriebsseitiges Übertragungselement des letztgenannten drehfest, aber axial verschiebbar, an der Zwischenlamelle angreift. Das antriebsseitige Übertragungselement bildet gemeinsam mit Energiespeichern einer antriebsseitigen Energiespeichergruppe und mit als Zwischen-Übertragungselement des Torsionsschwingungsdämpfers dienenden Deckblechen eine antriebsseitige Dämpfungseinrichtung. Die Deckbleche, die axial zueinander beabstandet sind, bilden ihrerseits zusammen mit Energiespeichern einer abtriebsseitigen Energiespeichergruppe und mit einem abtriebsseitigen Übertragungselement eine abtriebsseitige Dämpfungseinrichtung. Diese steht mit einem abtriebsseitigen Bauteil, wie einer Getriebeeingangswelle, in drehfester Verbindung.

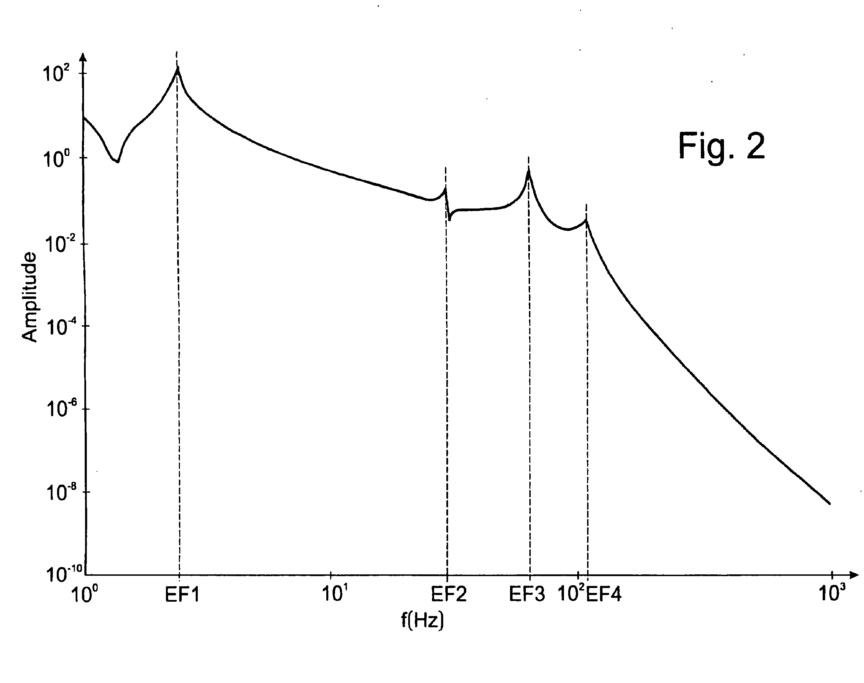

Der Antriebsstrang eines Kraftfahrzeugs kann, bei Betrachtung als freies Schwingungssystem mit einer hydrodynamischen Kupplungsanordnung, grob auf sechs Massen reduziert werden, wobei der Antrieb mit einem Pumpenrad als erste Masse, das Turbinenrad als zweite Masse, die Getriebeeingangswelle als dritte Masse, die Kardanwelle und das Differential als vierte Masse, die Räder als fünfte Masse und das Gesamtfahrzeug als sechste Masse angenommen werden. Bei einem freien Schwingungssystem mit n=sechs Massen treten bekanntermaßen n-1 Eigenfrequenzen, mithin also fünf Eigenfrequenzen, auf, von denen die erste die Rotation des gesamten Schwingungssystems betrifft und im Hinblick auf Schwingungsdämpfung nicht relevant ist. Die Drehzahlen, bei welchen die Eigenfrequenzen angeregt werden, sind von der Zylinderzahl des als Brennkraftmaschine ausgebildeten Antriebs abhängig. In Fig. 2 ist schematisch ein Diagramm zur logarithmischen Darstellung des Amplitudenfrequenzganges am Turbinenrad einer hydrodynamischen Kupplungsanordnung abgebildet.

Zugunsten eines möglichst geringen Kraftstoffverbrauchs besteht die Tendenz, eine Überbrückungskupplung schon bei sehr niedriger Drehzahl zu schließen, um schlupfbedingte Verluste im hydrodynamischen Kreis so gering wie möglich zu halten.

Für die Überbrückungskupplung bedeutet dies, dass sie bei einer Frequenz geschlossen wird, die zwar oberhalb der ersten und zweiten Eigenfrequenz EF 1 und EF 2, aber noch unterhalb der dritten und vierten Eigenfrequenz EF 3 und EF 4 liegt. Während die ersten beiden Eigenfrequenzen EF 1 und EF 2 im hydrodynamischen Kreis der hydrodynamischen Kopplungsanordnung dämpfbar sind, kann der Antriebsstrang beim Durchfahren der dritten und vierten Eigenfrequenz EF 3 und EF 4 zu unerwünschten Geräuschen angeregt werden, wobei insbesondere die dritte Eigenfrequenz EF 3 noch sehr große Amplituden haben kann.

Zurückkommend auf die DE 103 58 901 A1, weist der Torsionsschwingungsdämpfer beispielsweise gemäß Fig. 1 zwei Dämpfungseinrichtungen auf, von denen die antriebsseitige mit der Zwischenlamelle als einem Bauteil der Überbrückungskupplung und die abtriebsseitige mit der Getriebeeingangswelle als einem abtriebsseitigen Bauteil der hydrodynamischen Kupplungsanordnung in Drehverbindung steht. Wirkungsmäßig zwischen den beiden Dämpfungseinrichtungen ist das Turbinenrad als Masseelement an das Zwischen-Übertragungselement angeschlossen.

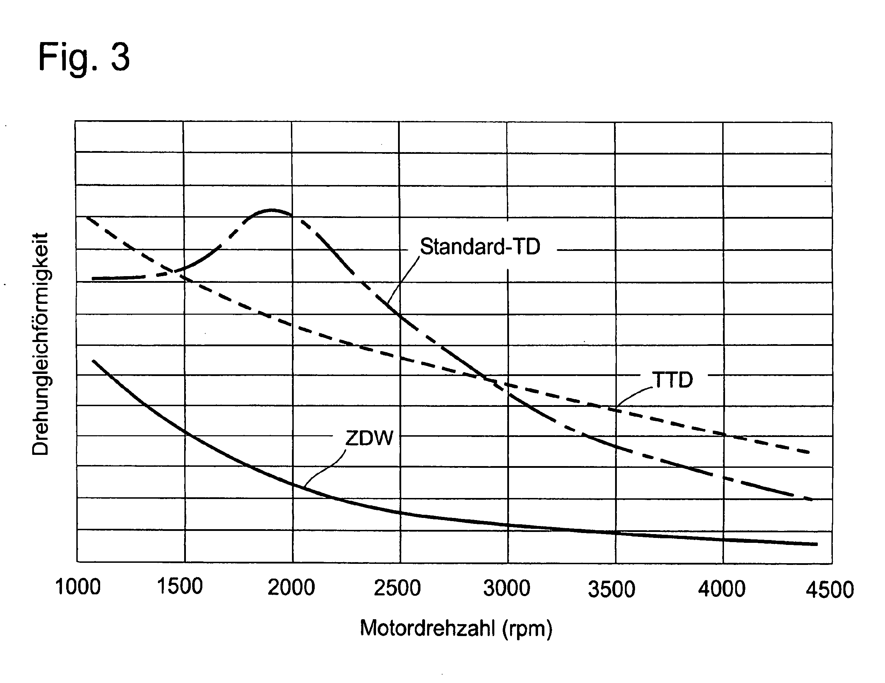

Aufgrund einer derartigen Anbindung des Turbinenrades wirkt die antriebsseitige Dämpfungseinrichtung als ein Torsionsschwingungsdämpfer (TD), der in Fachkreisen als "Standard-TD" bezeichnet ist und, für sich gesehen, über den in Fig. 3 eingezeichneten Dämpfungsverlauf verfügen würde. Ein Standard-TD würde bei dem in Fig. 2 schematisch in logarithmischer Darstellung abgebildeten Amplitudenfrequenzgang am Turbinenrad einer hydrodynamischen Kupplungsanordnung sowohl die Amplitude der dritten Eigenfrequenz EF 3 als auch die Amplitude der vierten Eigenfrequenz EF 4 senken. Deutlich verbliebe allerdings für die dritte Eigenfrequenz EF3 eine Überhöhung der Drehungleichförmigkeit im Drehzahlbereich von etwa 1500 Umdrehungen pro Minute, wie aus Fig. 3 erkennbar ist.

Da bei dem Torsionsschwingungsdämpfer nach der DE 103 58 901 A1 die abtriebsseitige Dämpfungseinrichtung mit ihrem abtriebsseitigen Übertragungselement zu einer Relativdrehung gegenüber dem am Zwischen-Übertragungselement befestigten Turbinenrad befähigt ist, wirkt die abtriebsseitige Dämpfungseinrichtung als ein in Fachkreisen als "Turbinentorsionsdämpfer TTD" bezeichneter Torsionsschwingungsdämpfer, der, für sich gesehen, den in Fig. 3 eingezeichneten Dämpfungsverlauf ergeben würde, bei welchem die sich durch die dritte Eigenfrequenz EF3 ergebende Überhöhung der Drehungleichförmigkeit in einen Bereich um etwa 1000 Umdrehungen pro Minute verlagern und daher im üblichen Drehzahlbereich nur noch wenig stören würde.

Abweichend zu den vorangehenden Ausführungen ergibt sich bei dem Torsionsschwingungsdämpfer nach der DE 103 58 901 A1, der in Fachkreisen als "Zweidämpferwandter ZDW" bezeichnet ist, die Wirkung, dass durch die als Standard-TD geschaltete antriebsseitige Dämpfungseinrichtung die Eigenfrequenzen EF 3 und EF 4 reduziert werden, und durch die als TTD geschaltete abtriebsseitige Dämpfungseinrichtung die hiervon störendere Eigenfrequenz EF 3 zu einer niedrigeren Drehzahl verlagert wird, bei welcher diese eine kaum noch wahrnehmbare Störwirkung entfaltet. Damit ist mit dem ZDW der in Fig. 3 eingezeichnete Dämpfungsverlauf erzielbar.

Ein derartiger Dämpfungsverlauf wird bei modernen Fahrzeugen angestrebt, damit diese auch in dem für den Verbrauch relevanten unteren Teillastbereich mit vollständig eingerückter Überbrückungskupplung betrieben werden können, ohne hierbei Nachteile in Form störender Schwingungen oder Geräusche in Kauf nehmen zu müssen. Sofern allerdings die Überbrückungskupplung bereits bei Drehzahlen in der Größenordnung von 1000 Umdrehungen/Minute geschlossen werden soll, kann selbst der durch ein ZDW bewirkte Dämpfungsverlauf unzureichend sein.

Ein weiterer Torsionsschwingungsdämpfer in einer als Drehmomentwandler realisierten hydrodynamischen Kopplungsanordnung ist aus der EP 0 744 563 A2 bekannt. Bevor im einzelnen zu dieser Veröffentlichung Stellung genommen wird, soll festgestellt werden, dass bei dem darin offenbarten Torsionsschwingungsdämpfer zwar jeweils zwei Energiespeichergruppen vorgesehen sind, dass dieser Torsionsschwingungsdämpfer aber nicht als ZDW, wie zuvor ausführlich dargelegt, aufgebaut ist, und daher nicht den mit einem ZDW erzielbaren, vorteilhaften Dämpfungsverlauf zu bieten vermag.

Der in der EP 0 744 563 A2 behandelte Torsionsschwingungsdämpfer beinhaltet zwei Energiespeichergruppen, bei denen jeweils ausschließlich Energiespeicher gleicher Federsteifigkeit enthalten sind, wobei entweder die Energiespeicher der antriebsseitigen Energiespeichergruppe oder aber die Energiespeicher der abtriebsseitigen Energiespeichergruppe über die jeweils geringere Federsteifigkeit verfügen. Die Relativdrehauslenkung ist bei beiden Energiespeichergruppen durch Drehwinkelanschläge begrenzt. In Abhängigkeit von der Bestückung der Energiespeichergruppen mit der geringeren bzw. höheren Federsteifigkeit ergeben sich unterschiedliche Kennlinienverläufe. So verläuft die Kennlinie bei Ausbildung der antriebsseitigen Energiespeichergruppe mit der geringeren Federsteifigkeit zunächst sehr flach, um beim Übergang zur abtriebsseitigen Energiespeichergruppe relativ stark anzusteigen. Bei Ausbildung der abtriebsseitigen Energiespeichergruppe mit der geringeren Federsteifigkeit verläuft die Kennlinie dagegen relativ konstant ansteigend.

Der Erfindung liegt die Aufgabe zugrunde, einen Torsionsschwingungsdämpfer an einer Überbrückungskupplung einer hydrodynamischen Kopplungsanordnung mit zumindest zwei Dämpfungseinrichtungen so auszubilden, dass unerwünschte Schwingungen oder Geräusche nicht mehr störend in Erscheinung treten.

Diese Aufgabe wird durch die Merkmale der Ansprüche 1 oder 2 gelöst.

Ausgangspunkt der Erfindung ist ein Torsionsschwingungsdämpfer mit wenigstens zwei Energiespeichergruppen, von denen eine erste Energiespeichergruppe, vorzugsweise die antriebsseitige Energiespeichergruppe, über zumindest einen Energiespeicher verfügt, dem zur Erzeugung einer Kennlinie ein einziger Kennlinienabschnitt genügt. Eine zweite Energiespeichergruppe des Torsionsschwingungsdämpfers, vorzugsweise die abtriebsseitige Energiespeichergruppe, weist ebenfalls ausschließlich gleiche Energiespeicher zur Erzeugung einer Kennlinie mit einem Kennlinienabschnitt auf.

Bei der Ausführung des Torsionsschwingungsdämpfers gemäß Anspruch 1 oder 2 kann dafür gesorgt werden, dass zwischen ausschließlich gleichartigen Energiespeichern der ersten Energiespeichergruppe und ausschließlich gleichartigen Energiespeichern der zweiten Energiespeichergruppe ein vorbestimmtes Steifigkeitsverhältnis SV gebildet wird. Mit Vorzug ist eine der Energiespeichergruppen derart ausgelegt, dass ihre Kennlinie bei einem vorbestimmten ersten Momentenbetrag ME1 endet, während die Kennlinie der anderen Energiespeichergruppe bei einem zweiten Momentenbetrag ME2 endet, wobei der zweite Momentenbetrag ME2 zum einen in der Größenordnung der maximal möglichen Momentenanforderung eines Antriebs, wie der Kurbelwelle einer Brennkraftmaschine, liegen sollte, und zum anderen durch den ersten Momentenbetrag ME1 nur geringfügig überschritten werden sollte. Bei einer derartigen Auslegung wird bei einer Momentenanforderung vom Antrieb der geringere Momentenwert ME2 nicht überschritten und somit die Wirksamkeit beider Energiespeichergruppen aufrecht erhalten, solange die Momentenanforderung des Antriebs dicht unterhalb der maximal möglichen Momentenanforderung verbleibt, demnach also beim weitaus überwiegenden Teil der Betriebsphase.

Vorteilhafterweise liegt der höhere Momentenwert ME1 gemäß Anspruch 1 in einem Bereich zwischen 110% und 120% des vom Antrieb lieferbaren. Moments, der geringere Momentenwert ME2 dagegen in einem Bereich zwischen 80% und 100% dieses Moments. Der geringere Momentenwert ME2 ist demnach mit Vorzug in einem Bereich zwischen 10% und 40% unterhalb des höheren Momentenwertes ME1 angesiedelt.

Für das Steifigkeitsverhältnis SV der Energiespeicher der antriebsseitigen Energiespeichergruppe zu den Energiespeichern der abtriebsseitigen Energiespeichergruppe gemäß Anspruch 2 wurde herausgefunden, dass sich in einem Bereich von 0,7 bis 1,2 ein besonders vorteilhaftes Dämpfungsverhalten für den Torsionsschwingungsdämpfer einstellt.

Im Fall der Ausführung des Torsionsschwingungsdämpfers nach den Ansprüchen1 bis 3 ist der höhere Momentenwert ME1 der ersten Energiespeichergruppe zugeordnet, und der geringere Momentenwert ME2 der zweiten Energiespeichergruppe. Allerdings kann auch eine entgegengesetzte Auslegung der beiden Energiespeichergruppen zueinander erfolgen und vorteilhaft sein.

Mit Vorzug liegt der jeweils geringere Momentenwert also zwischen 10% und 40% unterhalb des jeweils höheren Momentenwertes. Dadurch bedingt, verläuft die zugeordnete Summenkennlinie innerhalb des überwiegenden Bereichs des eingeleiteten Momentes, also innerhalb eines Bereichs von etwa 80% bis 100%, zumindest im wesentlichen ohne Knickstelle oder ohne einen Bereich mit einer deutlich wahrnehmbaren Diskontinuität. Dies trifft insbesondere deshalb zu, weil beide Energiespeichergruppen des Torsionsschwingungsdämpfers jeweils über ausschließlich gleichartige Energiespeicher und damit jeweils über einen einzigen Kennlinienabschnitt verfügen.

Die Erfindung ist anhand von Ausführungsbeispielen näher erläutert. Es zeigt:
- Fig. 1:: die obere Hälfte eines Längsschnittes durch eine hydrodynamische Kupplungsanordnung mit einer Überbrückungskupplung und einem Torsionsschwingungsdämpfer, der über zwei Energiespeichergruppen verfügt;
- Fig. 2:: ein schematisches Diagramm zur logarithmischen Darstellung des Amplitudenfrequenzganges am Turbinenrad der hydrodynamischen Kupplungsanordnung;
- Fig. 3:: eine schematische Darstellung des Drehungleichförmigkeitsverlaufes unterschiedlicher Torsionsschwingungsdämpfer;
- Fig. 4:: ein Kennliniendiagramm für den Torsionsschwingungsdämpfer mit einer Summenkennlinie, die sich aus zwei Kennlinien mit jeweils einem einzigen Kennlinienabschnitt ergibt;
- Fig. 5:: die antriebsseitige Energiespeichergruppe mit zwei in Reihe geschalteten, ausschließlich gleichen Energiespeichern;
- Fig. 6:: wie Fig. 5, aber die abtriebsseitige Energiespeichergruppe darstellend;
- Fig. 7:: eine Drosselklappe zur Beeinflussung des Leistungsverhaltens eines vor der hydrodynamischen Kopplungsvorrichtung angeordneten Antriebs.

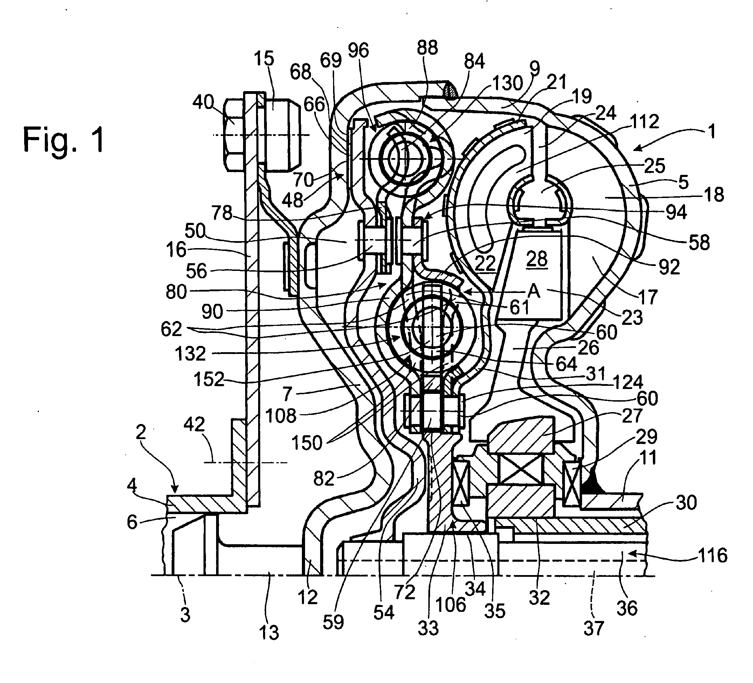

In Fig. 1 ist eine hydrodynamische Kupplungsanordnung 1 in Form eines hydrodynamischen Drehmomentwandlers dargestellt, der um eine Drehachse 3 Rotationsbewegungen auszuführen vermag. Die hydrodynamische Kupplungsanordnung 1 verfügt über ein Kupplungsgehäuse 5, das an seiner einem Antrieb 2, wie beispielsweise der Kurbelwelle 4 einer Brennkraftmaschine, zugewandten Seite, einen Gehäusedeckel 7 aufweist, der fest mit einer Pumpenradschale 9 verbunden ist. Diese geht im radial inneren Bereich in eine Pumpenradnabe 11 über.

Zurückkommend auf den Gehäusedeckel 7, weist dieser im radial inneren Bereich eine einen Lagerzapfen 13 tragende Zapfennabe 12 auf, wobei der Lagerzapfen 13 in bekannter Weise in einer Aussparung 6 der Kurbelwelle 4 zur antriebsseitigen Zentrierung des Kupplungsgehäuses 5 aufgenommen ist. Weiterhin verfügt der Gehäusedeckel 7 über eine Befestigungsaufnahme 15, die zur Befestigung des Kupplungsgehäuses 5 am Antrieb 2 dient, und zwar über die Flexplatte 16. Diese ist mittels Befestigungselementen 40 an der Befestigungsaufnahme 15 und mittels nur schematisch angedeuteten Befestigungselementen 42 an der Kurbelwelle 4 befestigt.

Die bereits erwähnte Pumpenradschale 9 bildet zusammen mit Pumpenradschaufeln 18 ein Pumpenrad 17, das mit einem eine Turbinenradschale 21 und Turbinenradschaufeln 22 aufweisenden Turbinenrad 19 sowie mit einem mit Leitradschaufeln 28 versehenen Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Die Leitradschaufeln 28 des Leitrades 23 sind auf einer Leitradnabe 26 vorgesehen, die auf einem Freilauf 27 angeordnet ist. Der Letztgenannte stützt sich über eine Axiallagerung 29 an der Pumpenradnabe 11 axial ab und steht in drehfester, aber axial relativ verschiebbarer Verzahnung 32 mit einer Stützwelle 30, die radial innerhalb der Pumpenradnabe 11 angeordnet ist. Die als Hohlwelle ausgebildete Stützwelle 30 ihrerseits umschließt eine als abtriebsseitiges Bauteil 116 der hydrodynamischen Kupplungsvorrichtung 1 dienende Getriebeeingangswelle 36, die mit einer Mittenbohrung 37 zum Durchgang von Hydraulikflüssigkeit versehen ist. Die Getriebeeingangswelle 36 nimmt über eine Verzahnung 34 eine Torsionsdämpfernabe 33 drehfest, aber axial verschiebbar auf, wobei diese Torsionsdämpfernabe 33 zur relativ drehbare Aufnahme eines Turbinenradfußes 31 dient. Die Torsionsdämpfernabe 33 stützt sich einerseits über eine Axiallagerung 35 am bereits genannten Freilauf 27 ab, und kommt andererseits über einen Kolben 54 einer Überbrückungskupplung 48 am Gehäusedeckel 7 zur Anlage.

Die bereits erwähnte Mittenbohrung 37 der Getriebeeingangswelle 36 dient zur Versorgung des hydrodynamischen Kreises 24 sowie zur Druckbeaufschlagung der Überbrückungskupplung 48, wozu eine Verbindung mit einer Steuervorrichtung und einem Hydraulikflüssigkeitsvorrat erforderlich ist. Weder die Steuervorrichtung noch der Hydraulikflüssigkeitsvorrat sind zeichnerisch dargestellt, können aber der Fig. 1 der DE 44 23 640 A1 entnommen werden und sind daher als inhaltlich in die vorliegende Patentanmeldung aufgenommen zu betrachten.

Über die Mittenbohrung 37 der Getriebeeingangswelle 36 eingeströmte Hydraulikflüssigkeit gelangt in eine Kammer 50, die axial zwischen dem Gehäusedeckel 7 und dem Kolben 54 der Überbrückungskupplung 48 angeordnet ist. Der Kolben 54 ist mit seiner von der Kammer 50 abgewandten Seite dem hydrodynamischen Kreis 24 zugewandt und in Abhängigkeit von den Druckverhältnissen im hydrodynamischen Kreis 24 sowie in der Kammer 50 zum Ein- oder Ausrücken der Überbrückungskupplung 48 zwischen zwei unterschiedlichen Grenzstellungen axial bewegbar.

Der Kolben 54 trägt in seinem radial äußeren Bereich an der dem Gehäusedeckel 7 zugewandten Seite einen Reibbelag 68, wobei durch diesen ein Reibbereich 69 bereitgestellt wird, der mit je einem Gegenreibbereich 70 am Gehäusedeckel 7 zusammenwirkt. Radial innerhalb des Reibbelages 68 ist am Kolben 54 mittels Vernietung 56 ein antriebsseitiges Übertragungselement. 78 eines Torsionsschwingungsdämpfers 80 befestigt.

Das antriebsseitige Übertragungselement 78 verfügt über einen sich im Wesentlichen radial erstreckenden Bereich, der über nach radial außen greifende Ansteuerelemente 84 verfügt, die mit einer ersten Energiespeichergruppe 130, nachfolgend als antriebsseitige Energiespeichergruppe 130 bezeichnet, in Wirkverbindung versetzbar sind. Die antriebsseitige Energiespeichergruppe 130 verläuft im Wesentlichen in Umfangsrichtung und stützt sich anderenends an Ansteuerelementen 88 eines antriebsseitigen Deckbleches 90 ab, wobei dieses die antriebsseitige Energiespeichergruppe 130 auf einem Teil ihres Umfangs umfasst. Das antriebsseitige Deckblech 90 steht über eine Vernietung 58 sowie eine Verzapfung 59 in drehfester Verbindung mit einem abtriebsseitigen Deckblech 92, über die Verzapfung 59 darüber hinaus auch mit dem Turbinenradfuß 31. Die Deckbleche 90 und 92 dienen gemeinsam als Zwischen-Übertragungselement 94 des Torsionsschwingungsdämpfers 80. Die Verzapfung 59 dient in einer Zusatzfunktion als Bauteil einer Verdrehwinkelbegrenzung 124 zwischen den Deckblechen 90, 92 und einer mit der Torsionsdämpfernabe 33 drehfesten Nabenscheibe 82, indem die Verzapfung 59 in Umfangsaussparungen 72 eingreift, die in der Nabenscheibe 82 vorgesehen sind, und sich in Umfangsrichtung langlochförmig erstrecken. Die Umfangsaussparungen 72 lassen dadurch eine umfangsseitig begrenzte Relativbewegung der Verzapfung 59 in Umfangsrichtung zu. Die Nabenscheibe 82 bildet gemeinsam mit der Torsionsdämpfernabe 33 ein abtriebsseitiges Übertragungselement 106 des Torsionsschwingungsdämpfers 80.

Zurückkommend auf die als Zwischen-Übertragungselement 94 wirksamen Deckbleche 90, 92, sind diese radial zwischen Vernietung 58 und Verzapfung 59 mit Ausnehmungen 150 in Form von Federfenstern 62 für eine zweite Energiespeichergruppe 132, die nachfolgend als abtriebsseitige Energiespeichergruppe 132 bezeichnet ist, versehen, während die als abtriebsseitiges Übertragungselement 106 der abtriebsseitigen Dämpfungsvorrichtung 108 vorgesehene Nabenscheibe 82 mit Ansteuerelementen 60 für diese Energiespeichergruppe 132 ausgebildet ist, zwischen denen, in Umfangsrichtung gesehen, jeweils Ausnehmungen 152 in Form von Federfenstern 64 für die abtriebsseitige Energiespeichergruppe 132 vorgesehen sind.

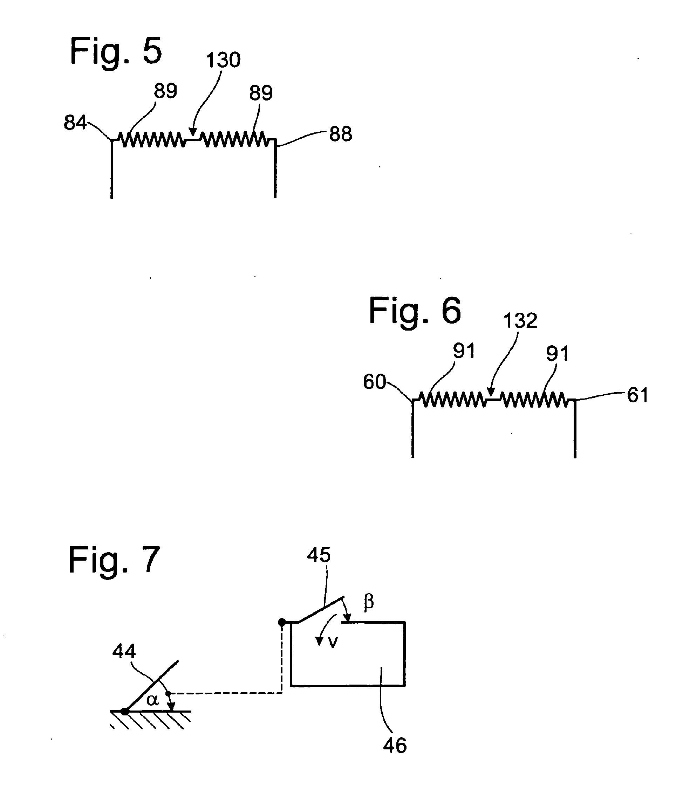

Zur antriebsseitigen Energiespeichergruppe 130 bleibt nachzutragen, dass diese gemäß Fig. 5 ausschließlich gleiche Energiespeicher 89 aufweist, deren Steifigkeiten sich somit nicht voneinander unterscheiden. Die abtriebsseitige Energiespeichergruppe 132 verfügt gemäß Fig. 6 über ausschließlich gleiche Energiespeicher 91.

Aus dem antriebsseitigen Übertragungselement 78 soll in Verbindung mit der antriebsseitien Energiespeichergruppe 130 und dem Zwischen-Übertragungselement 94 eine antriebsseitige Dämpfungseinrichtung 96 des Torsionsschwingungsdämpfers 80 gebildet werden, aus dem Zwischen-Übertragungselement 94 zusammen mit der abtriebsseitigen Energiespeichergruppe 132 und dem abtriebsseitigen Übertragungselement 106 eine abtriebsseitige Dämpfungseinrichtung 108. Bei dem Torsionsschwingungsdämpfer. 80 dient das Turbinenrad 19 als Masseelement 112, das wirkungsmäßig zwischen den beiden Dämpfungseinrichtungen 96 und 108 am Zwischen-Übertragungselement 94 angebunden ist.

Da für die antriebsseitige Dämpfungseinrichtung 96 das Zwischen-Übertragungselement 94 als abtriebsseitiges Bauteil wirksam ist, und dieses über die Verzapfung 59 mit dem Turbinenrad 19 in Festverbindung steht, wirkt die antriebsseitige Dämpfungseinrichtung 96 wie ein Standardtorsionsdämpfer, in Fachkreisen als Standard-TD bezeichnet (vgl. Fig. 3). Im Gegensatz dazu dient das Zwischen-Übertragungselement 94 bei der abtriebsseitigen Dämpfungseinrichtung 108 als antriebsseitiges Bauteil, während das abtriebsseitige Übertragungselement 106 dieser Dämpfungseinrichtung 108 zwar mit der Torsionsdämpfernabe 33 drehfest, gegenüber dem Turbinenrad 19 dagegen relativ drehbar ist. Insofern ist die abtriebsseitige Dämpfungseinrichtung 108 als Turbinentorsionsdämpfer TTD (Fig. 3) wirksam.

Damit sind bei dem in Fig. 1 gezeigten Torsionsschwingungsdämpfer 80 ein Standardtorsionsdämpfer und ein Turbinentorsionsdämpfer in einer Baueinheit in Reihe geschaltet und können sich demnach bezüglich ihrer jeweils spezifischen Wirkungen ergänzen. Es handelt sich somit gemäß Fig. 3 um einen ZDW.

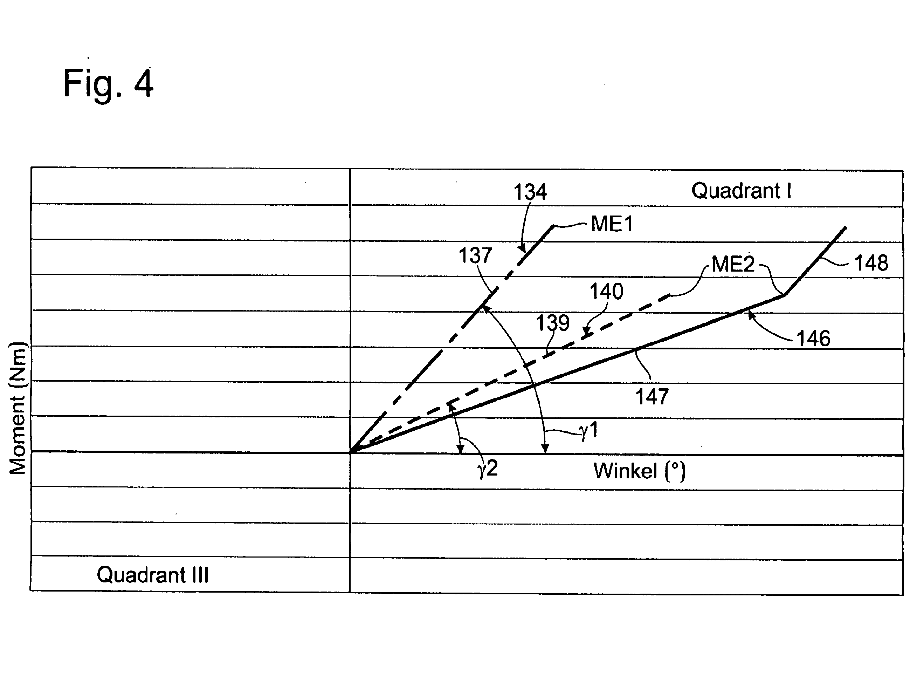

Fig. 4 zeigt ein Diagramm, bei welchem zur Darstellung von Kennlinien der Energiespeichergruppen 130, 132 das wirksame Drehmoment über dem zugeordneten Auslenkwinkel der Energiespeicher der Energiespeichergruppen aufgetragen ist, und zwar im Quadranten I zur Darstellung bei Zugbetrieb und im Quadranten III zur Darstellung bei Schubbetrieb. In dem Diagramm ist eine der antriebsseitigen Energiespeichergruppe 130 zugeordnete erste Kennlinie 134 in strichpunktierter Ausführung dargestellt, eine der abtriebsseitigen Energiespeichergruppe 132 zugeordnete zweite Kennlinie 140 in gestrichelter Ausführung, und eine durch Überlagerung beider Kennlinien 134, 140 gebildete Summenkennlinie 146 in unterbrechungsfreier Ausführung.

In Fig. 7 ist ein dem Antrieb 2 zugeordnetes Fahrpedal 44 um einen Winkel α betätigt, bei welchem eine nachgeordnete Drosselklappe 45 einer Gemischaufbereitungsstation 46 um einen Winkel β geöffnet ist. Der Winkel β kann bei diesem energiesparenden Modus einem Bereich von etwa 30% bis 80% der Auslenkweite der Drosselklappe 45 liegen.

In Fig. 4 ist, die Situation im Zugbetrieb betrachtend, die der antriebsseitigen Energiespeichergruppe 130 zugeordnete erste Kennlinie 134 mit einem einzigen Kennlinienabschnitt 137 versehen, der den ausschließlich gleichartigen Energiespeichern 89 zugeordnet ist. Ebenso ist die der abtriebsseitigen Energiespeichergruppe 132 zugeordnete zweite Kennlinie 140 mit einem einzigen Kennlinienabschnitt 139 versehen, der den ausschließlich gleichartigen Energiespeichern 91 zugeordnet ist.

Bei dieser Ausführung des Torsionsschwingungsdämpfers 2 können, wie sich aus dem größeren Steigungswinkel y1 des Kennlinienabschnittes 137 der ersten Kennlinie 134 im Vergleich zum Steigungswinkel y2 des Kennlinienabschnittes 139 der zweiten Kennlinie 140 ergibt, die Energiespeicher 89 der antriebsseitigen Energiespeichergruppe 130 von höherer Steifigkeit als die Energiespeicher 91 der abtriebsseitigen Energiespeichergruppe 132 sein. Ebenso sind allerdings auch Ausführungen denkbar, bei denen die Steifigkeit der Energiespeicher 89 der antriebsseitigen Energiespeichergruppe 130 geringer als die Steifigkeit der Energiespeicher 91 der abtriebsseitigen Energiespeichergruppe 132 ist. Für das Steifigkeitsverhältnis SV der Energiespeicher 89 der antriebsseitigen Energiespeichergruppe 130 zu den Energiespeichern 91 der abtriebsseitigen Energiespeichergruppe 132 wurde herausgefunden, dass sich in einem Bereich von 0,7 bis 1,2 ein besonders vorteilhaftes Dämpfungsverhalten für den Torsionsschwingungsdämpfer 80 einstellt.

Da der Übergang der zweiten Kennlinie 140 zur ersten Kennlinie 134 bei einem Momentenbetrag ME2 erfolgt, der dicht unterhalb der maximal möglichen Momentenanlieferung durch den Antrieb 2 liegt oder mit derselben sogar zumindest im wesentlichen gleich ist, während der Momentenbetrag ME1 der ersten Kennlinie 134 dicht oberhalb der maximal möglichen Momentenanlieferung durch den Antrieb 2 liegt, bleibt die resultierende Summenkennlinie 146 bis zum Erreichen des relativ hoch liegenden Momentenbetrag ME2 übergangsfrei, um erst danach einen von einem ersten Summenkennlinienabschnitt 147 auf einen zweiten Summenkennlinienabschnitt 148 erfolgenden Übergang aufzuweisen. Mit Vorzug werden hierbei die Momentenbeträge derart ausgewählt, dass der geringere Momentenbetrag ME2 zumindest im wesentlichen bei 80% bis 100% der maximal möglichen Momentenanforderung vom Antrieb 2 vorliegt, der höhere Momentenbetrag ME1 dagegen zumindest im wesentlichen bei 110% bis 120% der vorgenannten Momentenanforderung. Der Momentenbetrag ME1 kann damit etwa 10% bis 40% oberhalb des Momentenbetrages ME2 eingestellt sein.

Bei dieser Ausführung der Energiespeichergruppen 130, 132 des Torsionsschwingungsdämpfers 80 sind die Energiespeicher 89, 91 der beiden Energiespeichergruppen 130, 132 bis zum Erreichen des Momentenbetrags ME2 gleichzeitig wirksam, bevor allein die Energiespeicher 89 der ersten Energiespeichergruppe 130, 132 genutzt werden.

### Bezugszeichenliste

- 1: hydrod. Kupplungsanordnung
- 2: Antrieb
- 3: Drehachse
- 4: Kurbelwelle
- 5: Kupplungsgehäuse
- 6: Aussparung
- 7: Gehäusedeckel
- 9: Pumpenradschale
- 11: Pumpenradnabe
- 12: Zapfennabe
- 13: Lagerzapfen
- 15: Befestigungsaufnahme
- 16: Flexplate
- 17: Pumpenrad
- 18: Pumpenradschaufeln
- 19: Turbinenrad
- 21: Turbinenradschale
- 22: Turbinenradschaufeln
- 23: Leitrad
- 24: hydrodyn. Kreis
- 25: Innentorus
- 26: Leitradnabe
- 27: Freilauf
- 28: Leitradschaufeln
- 29: Axiallagerung
- 30: Stützwelle
- 31: Turbinenradfuß
- 32: Verzahnung
- 33: Torsionsdämpfernabe
- 34: Verzahnung
- 35: Axiallagerung
- 36: Getriebeeingangswelle
- 37: Mittenbohrung
- 38: Abdichtung
- 40, 42: Befestigungselemente
- 44: Fahrpedal
- 45: Drosselklappe
- 46: Gemischaufbereitungsbereich
- 48: Überbrückungskupplung
- 50: Kammer
- 54: Kolben
- 56: Vernietung
- 58: Vernietung
- 59: Verzapfung
- 60, 61: Ansteuerelemente
- 62, 64: Federfenster
- 66: Reibbelagträger
- 68: Reibbeläge
- 69: Reibbereich
- 70: Gegenreibbereich
- 72: Umfangsaussparungen
- 78: antriebss. Übertragungselement
- 80: Torsionsschwingungsdämpfer
- 82: radial äußere Nabenscheibe
- 84: Ansteuerelemente
- 88: Ansteuerelemente
- 89, 91: ausschließlich gleichartige Energiespeicher
- 90,92: Deckbleche
- 94: Zwischen-Übertragungselement
- 96: antriebss. Dämpfungseinrichtung
- 104: radial innere Nabenscheibe
- 106: abtriebss. Übertragungselement
- 108: abtriebss. Dämpfungseinrichtung
- 112: Masseelement
- 116: abtriebss. Bauteil
- 124: Verdrehwinkelbegrenzung
- 130: antriebsseitige Energiespeichergruppe
- 132: abtriebsseitige Energiespeichergruppe
- 134: erste Kennlinie
- 137: einziger Kennlinienabschnitt
- 139: einziger Kennlinienabschnitt
- 140: zweite Kennlinie
- 146: Summenkennlinie
- 147: erster Kennlinienabschnitt
- 148: zweiter Kennlinienabschnitt
- 150: Ausnehmungen des Zwischen-Übertragungselementes
- 152: Ausnehmungen des abtriebsseitigen Übertragungselementes

## Patentansprüche

1. Torsionsschwingungsdämpfer (80) an einer Überbrückungskupplung (48) einer hydrodynamischen Kopplungsanordnung (1), die zur Bildung eines hydrodynamischen Kreises (24) zumindest ein Pumpenrad (17) und ein Turbinenrad (19) aufweist, mit einer antriebsseitigen Dämpfungsvorrichtung (96), die mit dem Gehäuse (5) der Kopplungsanordnung (1) in Wirkverbindung bringbar und mit einem antriebsseitigen Übertragungselement (78) versehen ist, das über eine antriebsseitige Energiespeichergruppe (130) mit einem Zwischen-Übertragungselement (94) verbunden ist, und mit einer abtriebsseitigen Dämpfungsvorrichtung (108) für eine Wirkverbindung des Zwischen-Übertragungselementes (94) über eine abtriebsseitige Energiespeichergruppe (132) mit einem abtriebsseitigen Übertragungselement (106), das mit einem abtriebsseitigen Bauteil (116) der hydrodynamischen Kopplungsanordnung (1) verbunden ist, wobei jede Energiespeichergruppe (130, 132) jeweils über ausschließlich gleiche Energiespeicher (89, 91) verfügt, und dass zwischen den Energiespeichern (89) der ersten Energiespeichergruppe (130) und den Energiespeichern (91) der zweiten Energiespeichergruppe (132) ein vorbestimmtes Steifigkeitsverhältnis (SV) gebildet wird, wobei jeweils die Energiespeicher (89) der ersten Energiespeichergruppe (130) zumindest im wesentlichen eine andere Steifigkeit als die Energiespeicher (91) der zweiten Energiespeichergruppe (132) aufweisen,
wobei das Zwischen-Übertragungselement (94) drehfest mit dem Turbinenrad (19) verbunden ist, das relativ drehbar an dem abtriebsseitigen Übertragungselement (106) der abtriebsseitigen Dämpfungsvorrichtung (108) angreift, wobei das abtriebsseitige Übertragungselement (106) drehfest mit dem abtriebsseitigen Bauteil (116) verbunden ist,
und **dadurch gekennzeichnet, dass**
der einzige Kennlinienabschnitt (139) der Kennlinie (140) der mit geringerer Steifigkeit ausgebildeten Energiespeichergruppe (132) zumindest im wesentlichen bei einem Momentenbetrag (ME2) endet, der zwischen 80% und 100% des vom Antrieb (2) erzeugten Momentes liegt, während der einzige Kennlinienabschnitt (137) der Kennlinie (134) der mit höherer Steifigkeit ausgebildeten Energiespeichergruppe (130) zumindest im wesentlichen bei einem Momentenbetrag (ME1) endet, der zwischen 110% und 120% des vom Antrieb (2) erzeugten Momentes liegt.

2. Torsionsschwingungsdämpfer (80) an einer Überbrückungskupplung (48) einer hydrodynamischen Kopplungsanordnung (1), die zur Bildung eines hydrodynamischen Kreises (24) zumindest ein Pumpenrad (17) und ein Turbinenrad (19) aufweist, mit einer antriebsseitigen Dämpfungsvorrichtung (96), die mit dem Gehäuse (5) der Kopplungsanordnung (1) in Wirkverbindung bringbar und mit einem antriebsseitigen Übertragungselement (78) versehen ist, das über eine antriebsseitige Energiespeichergruppe (130) mit einem Zwischen-Übertragungselement (94) verbunden ist, und mit einer abtriebsseitigen Dämpfungsvorrichtung (108) für eine Wirkverbindung des Zwischen-Übertragungselementes (94) über eine abtriebsseitige Energiespeichergruppe (132) mit einem abtriebsseitigen Übertragungselement (106), das mit einem abtriebsseitigen Bauteil (116) der hydrodynamischen Kopplungsanordnung (1) verbunden ist, wobei jede Energiespeichergruppe (130, 132) jeweils über ausschließlich gleiche Energiespeicher (89, 91) verfügt, und dass zwischen den Energiespeichern (89) der ersten Energiespeichergruppe (130) und den Energiespeichern (91) der zweiten Energiespeichergruppe (132) ein vorbestimmtes Steifigkeitsverhältnis (SV) gebildet wird, wobei jeweils die Energiespeicher (89) der ersten Energiespeichergruppe (130) zumindest im wesentlichen eine andere Steifigkeit als die Energiespeicher (91) der zweiten Energiespeichergruppe (132) aufweisen,
wobei das Zwischen-Übertragungselement (94) drehfest mit dem Turbinenrad (19) verbunden ist, das relativ drehbar an dem abtriebsseitigen Übertragungselement (106) der abtriebsseitigen Dämpfungsvorrichtung (108) angreift, wobei das abtriebsseitige Übertragungselement (106) drehfest mit dem abtriebsseitigen Bauteil (116) verbunden ist,
und **dadurch gekennzeichnet, dass**
das Steifigkeitsverhältnis (SV) der Energiespeicher (89) der ersten Energiespeichergruppe (130) zu den Energiespeichern (91) der zweiten Energiespeichergruppe (132) in einem Bereich zwischen 0,7 und 1,2 angesiedelt ist.

3. Torsionsschwingungsdämpfer nach Anspruch 1 oder 2,
**dadurch gekennzeichnet,**
**dass** es sich bei der ersten Energiespeichergruppe (130) um die antriebsseitige Energiespeichergruppe (130) und bei der zweiten Energiespeichergruppe (132) um die abtriebsseitige Energiespeichergruppe (132) handelt.

4. Torsionsschwingungsdämpfer nach einem der Ansprüche 1 bis 3,
**dadurch gekennzeichnet,**
**dass** die ausschließlich gleichartigen Energiespeicher (89, 91) der zumindest einen Energiespeichergruppe (130, 132) bezüglich des Verlaufs ihres einzigen Kennlinienabschnittes (137, 139) auf den Teillastbereich des Antriebes (2) mit Stellung einer Drosselklappe (146) innerhalb eines Bereiches von im wesentlichen 25% bis 50% abgestimmt sind.

5. Torsionsschwingungsdämpfer nach einem der Ansprüche 1 bis 4,
**dadurch gekennzeichnet,**
**dass** der einzige Kennlinienabschnitt (137) der antriebsseitigen Energiespeichergruppe (130) jeweils in einem Momentenbereich (ME) endet, der um einen vorbestimmten Betrag oberhalb des bei der bevorzugten Stellung der Drosselklappe (45) vom Antrieb (2) gelieferten statischen Drehmomentes (MS) liegt.

6. Torsionsschwingungsdämpfer nach Anspruch 5,
**dadurch gekennzeichnet,**
**dass** der einzige Kennlinienabschnitt (137) der antriebsseitigen Energiespeichergruppe (130) in einem Momentenbereich (ME) endet, der mindestens um einen zwischen 10% und 30% liegenden vorbestimmten Betrag oberhalb des bei der bevorzugten Stellung der Drosselklappe (45) vom Antrieb (2) gelieferten statischen Drehmomentes (MS) eingestellt ist.

## Claims

1. Torsional vibration damper (80) in a lock-up clutch (48) of a hydrodynamic coupling arrangement (1) which has at least one impeller (17) and one turbine wheel (19) in order to form a hydrodynamic circuit (24), having a drive-side damping device (96) which can be brought into operative connection with the housing (5) of the coupling arrangement (1) and is provided with a drive-side transmission element (78) which is connected via a drive-side energy-store group (130) to an intermediate transmission element (94), and having an output-side damping device (108) for an operative connection of the intermediate transmission element (94) via an output-side energy-store group (132) to an output-side transmission element (106) which is connected to an output-side component (116) of the hydrodynamic coupling arrangement (1), each energy-store group (130, 132) having in each case exclusively homogeneous energy stores (89, 91), and a predefined stiffness ratio (SV) being formed between the energy stores (89) of the first energy-store group (130) and the energy stores (91) of the second energy-store group (132), in each case the energy stores (89) of the first energy-store group (130) having at least substantially a different stiffness than the energy stores (91) of the second energy-store group (132), the intermediate transmission element (94) being connected fixedly to the turbine wheel (19) so as to rotate with it, which turbine wheel (19) acts in a relatively rotatable manner on the output-side transmission element (106) of the output-side damping device (108), the output-side transmission element (106) being connected fixedly to the output-side component (116) so as to rotate with it, and **characterized in that** the single characteristic-curve section (139) of the characteristic curve (140) of the energy-store group (132) which is configured with lower stiffness ends at least substantially at a moment amount (ME2) which lies between 80% and 100% of the moment which is generated by the drive (2), while the single characteristic-curve section (137) of the characteristic curve (134) of the energy-store group (130) which is configured with greater stiffness ends at least substantially at a moment amount (ME1) which lies between 110% and 120% of the moment which is generated by the drive (2).

2. Torsional vibration damper (80) in a lock-up clutch (48) of a hydrodynamic coupling arrangement (1) which has at least one impeller (17) and one turbine wheel (19) in order to form a hydrodynamic circuit (24), having a drive-side damping device (96) which can be brought into operative connection with the housing (5) of the coupling arrangement (1) and is provided with a drive-side transmission element (78) which is connected via a drive-side energy-store group (130) to an intermediate transmission element (94), and having an output-side damping device (108) for an operative connection of the intermediate transmission element (94) via an output-side energy-store group (132) to an output-side transmission element (106) which is connected to an output-side component (116) of the hydrodynamic coupling arrangement (1), each energy-store group (130, 132) having in each case exclusively homogeneous energy stores (89, 91), and a predefined stiffness ratio (SV) being formed between the energy stores (89) of the first energy-store group (130) and the energy stores (91) of the second energy-store group (132), in each case the energy stores (89) of the first energy-store group (130) having at least substantially a different stiffness than the energy stores (91) of the second energy-store group (132), the intermediate transmission element (94) being connected fixedly to the turbine wheel (19) so as to rotate with it, which turbine wheel (19) acts in a relatively rotatable manner on the output-side transmission element (106) of the output-side damping device (108), the output-side transmission element (106) being connected fixedly to the output-side component (116) so as to rotate with it, and **characterized in that** the stiffness ratio (SV) of the energy stores (89) of the first energy-store group (130) to the energy stores (91) of the second energy-store group (132) is set in a range between 0.7 and 1.2.

3. Torsional vibration damper according to Claim 1 or 2, **characterized in that** the first energy-store group (130) is the drive-side energy-store group (130) and the second energy-store group (132) is the output-side energy-store group (132).

4. Torsional vibration damper according to one of Claims 1 to 3, **characterized in that** the exclusively homogeneous energy stores (89, 91) of the at least one energy-store group (130, 132) are adapted with regard to the profile of their single characteristic-curve section (137, 139) to the part-load range of the drive (2) with actuation of a throttle valve (146) within a range of substantially from 25% to 50%.

5. Torsional vibration damper according to one of Claims 1 to 4, **characterized in that** the single characteristic-curve section (137) of the drive-side energy-store group (130) ends in each case in a moment range (ME) which lies by a predefined amount above the static torque (MS) which is delivered by the drive (2) in the case of the preferred actuation of the throttle valve (45).

6. Torsional vibration damper according to Claim 5, **characterized in that** the single characteristic-curve section (137) of the drive-side energy-store group (130) ends in a moment range (ME) which is set above the static torque (MS) which is delivered by the drive (2) in the case of the preferred actuation of the throttle valve (45) at least by a predefined amount which lies between 10% and 30%.

## Revendications

1. Amortisseur d'oscillations de torsion (80) pour un embrayage de court-circuitage (48) d'un agencement d'accouplement hydrodynamique (1), qui présente, pour former un circuit hydrodynamique (24), au moins une roue de pompe (17) et une roue de turbine (19), avec un dispositif d'amortissement (96) du côté de l'entraînement, qui peut être amené en liaison fonctionnelle avec le boîtier (5) de l'agencement d'accouplement (1) et qui est pourvu d'un élément de transfert (78) du côté de l'entraînement, qui est connecté par le biais d'un groupe d'accumulateurs d'énergie (130) du côté de l'entraînement à un élément de transfert intermédiaire (94), et avec un dispositif d'amortissement (108) du côté de la sortie pour une liaison fonctionnelle de l'élément de transfert intermédiaire (94), par le biais d'un groupe d'accumulateurs d'énergie (132) du côté de la sortie, avec un élément de transfert (106) du côté de la sortie, qui est connecté à un composant (116) du côté de la sortie de l'agencement d'accouplement hydrodynamique (1), chaque groupe d'accumulateurs d'énergie (130, 132) disposant à chaque fois d'accumulateurs d'énergie (89, 91) exclusivement identiques, et un rapport de rigidité prédéterminé (SV) étant formé entre les accumulateurs d'énergie (89) du premier groupe d'accumulateurs d'énergie (130) et les accumulateurs d'énergie (91) du deuxième groupe d'accumulateurs d'énergie (132), les accumulateurs d'énergie (89) du premier groupe d'accumulateurs d'énergie (130) présentant à chaque fois au moins sensiblement une autre rigidité que les accumulateurs d'énergie (91) du deuxième groupe d'accumulateurs d'énergie (132),
l'élément de transfert intermédiaire (94) étant connecté de manière solidaire en rotation à la roue de turbine (19), qui vient en prise de manière relativement rotative avec l'élément de transfert (106) du côté de la sortie du dispositif d'amortissement (108) du côté de la sortie, l'élément de transfert (106) du côté de la sortie étant connecté de manière solidaire en rotation au composant (116) du côté de la sortie, et
**caractérisé en ce que**
la portion de courbe caractéristique unique (139) de la courbe caractéristique (140) du groupe d'accumulateurs d'énergie (132) réalisé avec la plus petite rigidité se termine au moins sensiblement à une valeur de couple (ME2) qui se situe entre 80 % et 100 % du couple produit par l'entraînement (2), tandis que la portion de courbe caractéristique unique (137) de la courbe caractéristique (134) du groupe d'accumulateurs d'énergie (130) réalisé avec la plus grande rigidité se termine au moins sensiblement à une valeur de couple (ME1) qui est comprise entre 110 % et 120 % du couple produit par l'entraînement (2).

2. Amortisseur d'oscillations de torsion (80) pour un embrayage de court-circuitage (48) d'un agencement d'accouplement hydrodynamique (1), qui présente, pour former un circuit hydrodynamique (24), au moins une roue de pompe (17) et une roue de turbine (19), avec un dispositif d'amortissement (96) du côté de l'entraînement, qui peut être amené en liaison fonctionnelle avec le boîtier (5) de l'agencement d'accouplement (1) et qui est pourvu d'un élément de transfert (78) du côté de l'entraînement, qui est connecté par le biais d'un groupe d'accumulateurs d'énergie (130) du côté de l'entraînement à un élément de transfert intermédiaire (94), et avec un dispositif d'amortissement (108) du côté de la sortie pour une liaison fonctionnelle de l'élément de transfert intermédiaire (94), par le biais d'un groupe d'accumulateurs d'énergie (132) du côté de la sortie, avec un élément de transfert (106) du côté de la sortie, qui est connecté à un composant (116) du côté de la sortie de l'agencement d'accouplement hydrodynamique (1), chaque groupe d'accumulateurs d'énergie (130, 132) disposant à chaque fois d'accumulateurs d'énergie (89, 91) exclusivement identiques, et un rapport de rigidité prédéterminé (SV) étant formé entre les accumulateurs d'énergie (89) du premier groupe d'accumulateurs d'énergie (130) et les accumulateurs d'énergie (91) du deuxième groupe d'accumulateurs d'énergie (132), les accumulateurs d'énergie (89) du premier groupe d'accumulateurs d'énergie (130) présentant à chaque fois au moins sensiblement une autre rigidité que les accumulateurs d'énergie (91) du deuxième groupe d'accumulateurs d'énergie (132),
l'élément de transfert intermédiaire (94) étant connecté de manière solidaire en rotation à la roue de turbine (19), qui vient en prise de manière relativement rotative avec l'élément de transfert (106) du côté de la sortie du dispositif d'amortissement (108) du côté de la sortie, l'élément de transfert (106) du côté de la sortie étant connecté de manière solidaire en rotation au composant (116) du côté de la sortie, et
**caractérisé en ce que**
le rapport de rigidité (SV) des accumulateurs d'énergie (89) du premier groupe d'accumulateurs d'énergie (130) par rapport aux accumulateurs d'énergie (91) du deuxième groupe d'accumulateurs d'énergie (132) est établi dans une plage comprise entre 0, et 1,2.

3. Amortisseur d'oscillations de torsion selon la revendication 1 ou 2,
**caractérisé en ce que**
le premier groupe d'accumulateurs d'énergie (130) est le groupe d'accumulateurs d'énergie (130) du côté de l'entraînement et le deuxième groupe d'accumulateurs d'énergie (132) est le groupe d'accumulateurs d'énergie (132) du côté de la sortie.

4. Amortisseur d'oscillations de torsion selon l'une quelconque des revendications 1 à 3,
**caractérisé en ce que**
les accumulateurs d'énergie (89, 91) exclusivement de même type de l'au moins un groupe d'accumulateurs d'énergie (130, 132) sont ajustés par rapport à l'allure de leur portion de courbe caractéristique unique (137, 139), sur la plage de charge partielle de l'entraînement (2), par positionnement d'un clapet d'étranglement (146), dans une plage de sensiblement 25 % à 50 %.

5. Amortisseur d'oscillations de torsion selon l'une quelconque des revendications 1 à 4,
**caractérisé en ce que**
la portion de courbe caractéristique unique (137) du groupe d'accumulateurs d'énergie (130) du côté de l'entraînement se termine à chaque fois par une plage de couples (ME) qui se situe à une valeur prédéterminée au-dessus du couple statique (MS) fourni par l'entraînement (2) dans la position préférée du clapet d'étranglement (45).

6. Amortisseur d'oscillations de torsion selon la revendication 5,
**caractérisé en ce que**
la portion de courbe caractéristique unique (137) du groupe d'accumulateurs d'énergie (130) du côté de l'entraînement se termine par une plage de couples (ME) qui se situe à une valeur prédéterminée comprise entre 10 % et 30 % au-dessus du couple statique (MS) fourni par l'entraînement (2) dans la position préférée du clapet d'étranglement (45).
